## Europäisches Patentamt
## European Patent Office
## Office européen des brevets

(19)

(11) Numéro de publication : **0 013 226**
**B1**

(12)

# FASCICULE DE BREVET EUROPÉEN

(45) Date de publication du fascicule du brevet :
**22.06.83**

(21) Numéro de dépôt : **79401038.9**

(22) Date de dépôt : **19.12.79**

(51) Int. Cl.³ : **G 21 C 17/10**

(54) **Procédé de protection d'un réacteur nucléaire à eau sous pression.**

(30) Priorité : **20.12.78 FR 7835765**

(43) Date de publication de la demande :
**09.07.80 Bulletin 80/14**

(45) Mention de la délivrance du brevet :
**22.06.83 Bulletin 83/25**

(84) Etats contractants désignés :
**BE DE GB IT SE**

(56) Documents cités :
**FR A 2 268 353**
**FR A 2 283 515**
**FR A 2 307 341**
**FR A 2 395 572**
**US A 3 998 693**
**US A 4 016 034**
**IEEE TRANSACTIONS ON NUCLEAR SCIENCE, vol. NS-17, février 1970, no. 1/Conf. 29-31 oct. 1969) L. M. JOHNSON et al. : « A two-range system for excore neutron flux monitoring », pages 572-580**
**KERNTECHNIK, vol. 16, 1974, no. 10, W. ALEIE et al. : « Incore Instrumentation for 1 300MW pressurised water rectors », pages 429-436**
**SIEMENS REVIEW, vol. 43, no. 7, 1976-7, H. W. BOCK : « Reactor Power Control by a Dual 305 Computer System at Stade Nuclear Power Station »**

(73) Titulaire : **Framatome**
**Tour Fiat 1 place de la Coupole**
**F-92400 Courbevoie (FR)**

(72) Inventeur : **Delor, Michel**
**10 rue des Pyrénées**
**F-92500 Rueil Malmaison (FR)**
Inventeur : **Bruyere, Michel**
**2 rue des Rosières**
**Evequemont F-78740 Vaux-Sur-Seine (FR)**

(74) Mandataire : **Bouget, Lucien et al**
**CREUSOT-LOIRE 15 rue Pasquier**
**F-75383 Paris Cedex 08 (FR)**

Jouve, 18, rue St-Denis, 75001 Paris, France

## Procédé de protection d'un réacteur nucléaire à eau sous pression

L'invention concerne un procédé de protection d'un réacteur nucléaire à eau sous pression permettant d'éviter de dépasser les limites de fonctionnement au-delà desquelles on porte atteinte à l'intégrité du combustible, par l'apparition de la crise d'ébullition et/ou par la fusion d'une ou plusieurs pastilles de combustible.

Dans un réacteur à eau sous pression, les éléments combustibles sont disposés parallèlement les uns au autres à l'intérieur du cœur du réacteur et délimitent entre eux des canaux pour l'eau de refroidissement. On déplace, pour la conduite du réacteur, entre ces éléments combustibles des barres de commande en matériau absorbant les neutrons. Les éléments combustibles sont plongés dans le fluide primaire qui est de l'eau sous pression servant à la fois de fluide caloporteur et de modérateur.

Lors du fonctionnement du réacteur, il faut éviter de porter atteinte à l'intégrité des éléments combustibles qui peuvent subir une dégradation irréversible sous l'effet de la chaleur qu'ils dégagent, si cette quantité de chaleur est trop importante pour être absorbée et entraînée par le fluide caloporteur ou si la circulation de fluide caloporteur est insuffisante.

Dans la conduite d'un réacteur nucléaire à eau sous pression, on cherche à se prémunir contre deux phénomènes différents qui s'accompagnent d'une destruction plus ou moins complète de combustible. Ces deux phénomènes sont d'une part la crise d'ébullition de l'eau sous pression au contact des éléments combustibles et d'autre part la fusion du combustible.

En effet, lors des échanges calorifiques entre le combustible et l'eau sous pression sur la surface externe des barreaux combustibles, l'eau, malgré son maintien à haute pression, se trouve, sous l'effet de la haute température des éléments combustibles, dans un état voisin de l'ébullition. Un phénomène limité d'ébullition au voisinage des éléments combustibles peut même favoriser les échanges thermiques entre les éléments combustibles et l'eau sous pression. Cependant, il faut éviter que cette ébullition ne conduise réellement à la formation d'un film de vapeur le long des éléments combustibles, car alors ce film de vapeur interdit des échanges importants entre l'élément combustible et l'eau sous pression, par un phénomène de caléfaction.

Il est donc extrêmement important de surveiller l'apparition du début de l'ébullition avec production de vapeur au contact des éléments combustibles ou crise d'ébullition, pour éviter, lors de la conduite du réacteur, d'entrer dans une zone de fonctionnement où cette crise d'ébullition apparaît.

En réalité, jusqu'ici on a toujours cherché à se placer dans des conditions telles qu'il subsiste une marge de sécurité entre les conditions de fonctionnement du réacteur et les conditions dans lesquelles apparaîtrait la crise d'ébullition, afin de tenir compte de la précision des mesures et des méthodes d'évaluation des conditions d'apparition de la crise d'ébullition.

D'autre part, un second type de phénomène pouvant apparaître au niveau des éléments combustibles et conduisant à leur destruction est la fusion d'une ou plusieurs pastilles des éléments combustibles sous l'effet d'un trop grand dégagement de puissance se traduisant par une élévation locale de température allant jusqu'au point de fusion du matériau constituant les pastilles de combustible. Ce dégagement de puissance peut conduire à une fusion, lorsque sa valeur par unité de longueur ou puissance linéique dépasse un certain seuil qu'on peut déterminer en fonction des caractéristiques du combustible.

Les techniques de protection des réacteurs nucléaires à eau sous pression contre l'apparition de l'un de ces deux phénomènes ont jusqu'ici consisté à calculer des paramètres représentatifs de ces phénomènes et à déclencher un arrêt d'urgence lorsqu'un des paramètres dépasse une valeur limite qui lui a été assignée, cette valeur limite tenant compte de certaines imprécisions dans les mesures, du caractère plus ou moins représentatif du paramètre et de la précision de l'évaluation de ces paramètres.

On peut donc être amené à déclencher des arrêts d'urgence dans des cas qui ne sont pas réellement critiques, si la détermination des paramètres se fait avec une certaine imprécision.

Les paramètres représentatifs de la crise d'ébullition et la puissance linéique peuvent être déterminés par le calcul à partir d'une mesure de la température d'entrée et de sortie du réfrigérant dans le réacteur, de la pression et du débit de ce réfrigérant et à partir de la distribution de puissance dans le cœur du réacteur.

Pour accroître la précision de la détermination, on peut évidemment accroître la précision de la mesure de température de pression et de débit mais jusqu'ici la distribution de puissance dans le cœur du réacteur n'a pu être déterminée avec précision lors du fonctionnement du réacteur nucléaire et l'on s'est contenté d'utiliser des valeurs enveloppes pour cette distribution, qu'il s'agisse de la distribution axiale ou de la distribution radiale.

Dans les modes de pilotage des réacteurs nucléaires à eau sous pression utilisés communément, on cherche à maintenir la déviation axiale du flux à une valeur constante.

La déviation axiale du flux est un paramètre représentatif du déséquilibre entre le flux neutronique de la partie supérieure du cœur $\phi H$ et du flux neutronique de la partie basse du cœur $\phi B$. Ce paramètre est égal au rapport $\phi H - \phi B / \phi H + \phi B$.

Dans ce mode de pilotage à déviation axiale constante, le seul paramètre mesuré, en ce qui concerne la distribution de flux ou de puissance dans le cœur est donc la déviation axiale du flux.

Cependant, pour une même valeur de la déviation axiale, on peut imaginer des formes de distribution du flux le long de l'élément combustible extrêmement variables.

Pour tenir compte de cette incertitude sur la distribution, pour le calcul des paramètres relatifs à la crise d'ébullition et à la puissance linéique, on utilise une distribution extrêmement défavorable, appelée distribution enveloppe, qui permet d'englober tous les cas de distribution plus favorables qui conduiraient à une même déviation axiale du flux.

En ce qui concerne la distribution radiale du flux, on prend en compte un facteur de distribution enveloppe tenant compte de toutes les situations possibles, et fonction de la position des barres de commande.

De telles distributions enveloppes conduisent donc à une évaluation des paramètres relativement pénalisante et pouvant conduire à des arrêts d'urgence dans des cas peu critiques.

D'autre part, dans des modes de pilotage du réacteur différents des modes à déviation axiale constante utilisés jusqu'ici de façon classique, tels que celui décrit dans la demande de brevet FR-A 2 395 572 de la demanderesse et utilisant des groupes de barres de commande moins absorbants que les groupes utilisés dans le cas d'un pilotage à déviation axiale constante par exemple, et un groupe de régulation absorbant, il n'est plus possible d'utiliser une valeur enveloppe tenant compte des positions de barres de commande pour la distribution radiale, car cette valeur enveloppe devrait tenir compte à la fois des positions des groupes de reprise de puissance peu absorbant et de la position du groupe de régulation, ce qui serait extrêmement compliqué ou uniquement de la position des groupes de reprise de puissance, ce qui conduirait à une évaluation très approximative des paramètres. De cette façon on ne pourrait pas bénéficier totalement de la souplesse d'utilisation du réacteur liée à ce mode de pilotage.

On connaît également un procédé de protection pour réacteur nucléaire à eau sous pression (US-A 3 998 693) consistant à déclencher un arrêt d'urgence lorsque certains paramètres calculés dépassent des valeurs admises permettant d'approcher les limites physiques réelles d'utilisation du réacteur. Cependant ce procédé ne fait pas appel à une détermination exacte de la distribution axiale de puissance qui est prise en compte sous la forme de la déviation axiale du flux. On ne parvient donc pas, dans certains cas, à approcher réellement les limites d'utilisation du réacteur.

Le but de l'invention est donc de proposer un procédé de protection d'un réacteur nucléaire à eau sous pression comportant des éléments combustibles disposés parallèlement les uns aux autres à l'intérieur du cœur du réacteur, entre lesquels on déplace des barres de commande pour la conduite du réacteur, éléments délimitant entre eux des canaux pour l'eau de refroidissement, ce procédé permettant d'éviter de dépasser les limites de refroidissement au-delà desquelles on porte atteinte à l'intégrité du combustible par l'apparition de la crise d'ébullition et/ou par la fusion d'une ou plusieurs pastilles de combustible, et consistant à déclencher un arrêt d'urgence lorsqu'un paramètre représentatif de la crise d'ébullition le long des éléments combustibles ou de la puissance dégagée par unité de longueur des éléments combustibles a dépassé une valeur limite qui lui a été assignée, les paramètres étant déterminés à partir d'une mesure de la température d'entrée et de sortie de l'eau de refroidissement dans le réacteur, de la pression et du débit de cette eau et à partir des distributions de puissance dans les directions radiales et longitudinales du cœur, la distribution de puissance en direction radiale étant elle-même déterminée à partir de la position des barres de commande et la distribution de puissance dans la direction longitudinale, ou distribution axiale de puissance, étant déterminée par mesure du flux neutronique au moyen de chambres d'ionisation disposées en dehors du cœur du réacteur l'une au-dessus de l'autre, chaque chambre comportant une plage de matériau sensible au bombardement neutronique, s'étendant sur une partie importante de la hauteur de la chambre dans la direction axiale, les résultats de mesure étant obtenus pour chacune des chambres sous forme d'intensité de courant d'ionisation.

Dans ce but, lesdites chambres d'ionisation sont au nombre de quatre au minimum et occupent toute la hauteur du cœur, et l'on exploite lesdits résultats de mesure de ces chambres en considérant la distribution de puissance a priori comme un polynôme en fonction de la position axiale du point où se développe cette puissance, afin d'obtenir sur toute la hauteur du cœur une image de la distribution axiale de puissance, image qui sert à déterminer lesdits paramètres.

On va maintenant décrire à titre d'exemple non limitatif, un mode de réalisation du procédé de protection suivant l'invention mis en œuvre sur un réacteur nucléaire à eau sous pression sur lequel on effectue des mesures de paramètres de fonctionnement permettant le calcul du paramètre représentatif de la crise d'ébullition et de la puissance par unité de longueur, la distribution axiale de puissance et la distribution radiale de puissance étant déterminées grâce à des chambres de mesure et au repérage de la position des barres de commande.

La figure 1 représente, en fonction du temps, lors d'un fonctionnement de trois jours d'un réacteur nucléaire à eau pressurisée, le niveau de la puissance du réacteur par rapport à la puissance nominale dans le cas d'un palier bas de cette puissance égal à 90 % de la puissance nominale.

La figure 2 représente les variations de la valeur maximale de la puissance par unité de longueur, le long des éléments combustibles pour un fonctionnement correspondant au diagramme de la figure 1.

La figure 3 représente les variations correspondantes de la marge vis-à-vis du point de déclenchement de la protection contre la crise d'ébullition.

La figure 4 représente les variations de la puissance mesurée par rapport à la puissance nominale au cours d'un cycle de fonctionnement de trois jours du réacteur, avec un palier bas à une valeur égale à 50 % de la puissance nominale.

La figure 5 représente les variations correspondantes de la puissance maximale par unité de longueur le long des éléments combustibles.

La figure 6 représente les variations correspondantes de la marge par rapport au point de déclenchement de la protection vis-à-vis de la crise d'ébullition.

La figure 7 représente, dans le cas d'un fonctionnement du réacteur nucléaire entre la puissance nominale et un palier bas égal à 50 % de la puissance nominale, l'évolution de la déviation axiale de flux au cours d'un retour instantané à la puissance nominale après un fonctionnement d'une durée variable à 50 % de la puissance nominale.

La figure 8 représente l'évolution de la puissance maximale par unité de longueur le long des éléments combustibles dans un fonctionnement entre la puissance nominale et un palier à 50 % de la puissance nominale, avec retour instantané en puissance toute les heures.

La figure 9 représente l'évolution correspondante à la marge par rapport au point de déclenchement de la protection contre la crise d'ébullition.

Les différents modes de fonctionnement qui seront décrits ultérieurement ont été réalisés sur un réacteur nucléaire à eau sous pression équipé d'un dispositif de mesure de flux neutronique constitué par des chambres d'ionisation disposées axialement les unes au-dessus des autres à l'extérieur du réacteur nucléaire et sur une hauteur correspondant à toute la hauteur du cœur.

Un tel dispositif de mesure à chambres d'ionisation a été décrit par exemple dans le brevet français 2 268 353 et comporte six chambres de mesure comportant deux électrodes dont l'une est recouverte d'un dépôt de bore.

Chacune des six chambres de mesure renferme un gaz ionisable en contact avec les électrodes portées à des potentiels différents.

Lors d'un bombardement par les neutrons en provenance du cœur du réacteur du dépôt de bore porté par l'une des électrodes, il se produit par réaction (n, $\alpha$), des particules $\alpha$ qui viennent ioniser le gaz renfermé dans la chambre si bien que les ions créés sont entraînés vers les électrodes et recueillis et la mesure du courant émis au niveau de ces électrodes est représentative de la mesure du flux neutronique émis par le réacteur au niveau de la chambre d'ionisation.

A partir des courants d'ionisation mesurés au niveau de chacune des chambres, on peut déterminer le flux neutronique au niveau du dépôt de bore réalisé sur la chambre de mesure.

Jusqu'ici, dans le but de mesurer le flux neutronique à un endroit bien déterminé sur la hauteur du cœur, on réalisait des dépôts de bore dans les chambres de mesure, de faible longueur dans la direction axiale. Ceci se faisait au détriment de la précision et de la sensibilité des mesures et était préjudiciable à l'obtention d'une image exacte de la distribution de puissance axiale dans le cœur.

Dans le cas du dispositif de mesure à chambres d'ionisation utilisé dans le cadre de l'invention, on a réalisé des dépôts de bore dans chacune des chambres pratiquement sur toute la hauteur de ces chambres avec un espacement entre chacun des dépôts de bore de chacune des chambres de faible longueur, si bien que la somme des longueurs des dépôts de bore sur les six chambres d'ionisation est voisine de la longueur des éléments combustibles.

Pratiquement on a utilisé six sections de mesure d'une longueur de 46,4 cm espacées de 4 cm.

A partir des mesures des courants d'ionisation sur chacune des chambres, un nouveau mode de calcul utilisant des développements sur des fonctions de base type polynome représentant la distribution de puissance axiale c'est-à-dire la variation de la puissance en fonction de la position axiale du point où elle se développe, permet d'obtenir une représentation précise de la distribution axiale de puissance le long des éléments combustibles.

En plus de ces mesures permettant une détermination de la distribution de la puissance axiale on effectue une mesure précise de la position des barres de commande ainsi que la mesure des paramètres permettant de déterminer le niveau de puissance du réacteur.

Les paramètres permettant de déterminer le niveau de puissance sont la pression du fluide primaire, la température d'entrée et la température de sortie de ce fluide dans le réacteur et le débit de ce fluide mesuré par rapport à un débit nominal. A partir de ces paramètres on détermine de façon classique le niveau de puissance du réacteur qui joint à la connaissance de la position des groupes de barres de commande suivant la hauteur du cœur permet de déterminer les distributions radiales de puissance suivant la position des barres de commande suivant la hauteur du cœur.

A partir du niveau de puissance du réacteur et des distributions de puissance axiale et radiale, on peut déterminer la puissance par unité de longueur, le long des éléments combustibles, pour chacune des zones axiales définies sur la hauteur du cœur.

Dans le cas où l'une des valeurs de la puissance par unité de longueur dépasse la puissance limite déterminée en fonction des caractéristiques du combustible, on déclenche un arrêt d'urgence.

A partir des distributions axiales et radiales de puissance, on peut déterminer le facteur d'élévation d'enthalpie F $\Delta$h.

A partir du facteur d'élévation d'enthalpie F $\Delta$h, du niveau de puissance Q du réacteur et de la distribution axiale de puissance déterminée à partir des mesures effectuées sur les chambres d'ionisation, on peut déterminer la marge par rapport à la crise d'ébullition, ce qui permet de déterminer un arrêt d'urgence dans le cas où l'on approche la crise d'ébullition.

Ces calculs sont effectués pour un canal représentatif du cœur du réacteur nucléaire uniquement, ce canal étant appelé canal chaud. Ceci permet évidemment une simplification du traitement numérique des données, un traitement plus complexe restant cependant possible puisqu'on connaît toutes les distributions de puissance dans le cœur.

On voit donc que le procédé suivant l'invention permet de déterminer des arrêts d'urgence, lorsque certains paramètres dépassent une valeur qui leur a été assignée, ces paramètres étant déterminés de façon précise grâce à une détermination de la distribution de puissance dans le cœur sans utilisation de distributions enveloppes permettant de couvrir un ensemble de cas.

On pourra donc déterminer quelle que soit la situation de fonctionnement du réacteur nucléaire, la puissance par unité de longueur des éléments combustibles en fonction de la position dans le cœur et la valeur maximale de ce paramètre, pendant toutes les étapes de fonctionnement du réacteur.

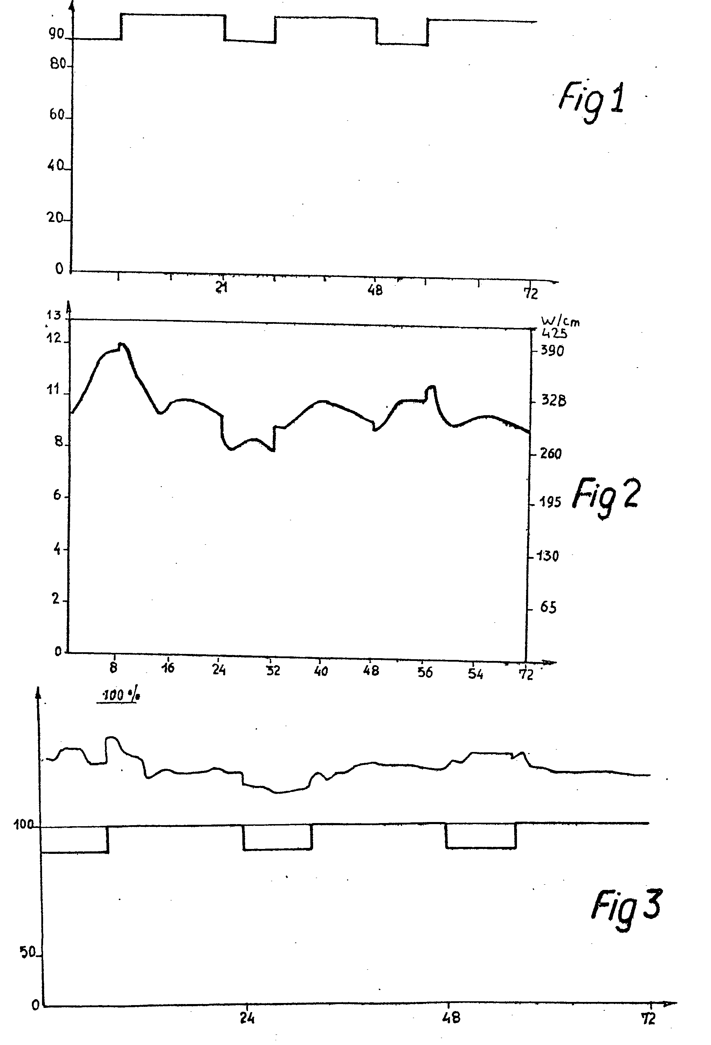

C'est ainsi que dans le cas d'un fonctionnement correspondant à la figure 1 où le réacteur fonctionne soit à la puissance nominale soit à une puissance égale à 90 % de la puissance nominale, on a pu déterminer quelles que soient les phases de fonctionnement la puissance maximale par unité de longueur dont les variations ont été représentées à la figure 2.

On voit ainsi que le fonctionnement du réacteur nucléaire suivant le diagramme représenté à la figure 1 est possible sans dépasser la valeur limite assignée à la puissance par unité de longueur et représentée par une droite horizontale dont l'ordonnée est égale à cette limite (425 W/cm).

Sur la figure 3 on a représenté les variations de la marge vis-à-vis du point de déclenchement de la protection contre la crise d'ébullition, au cours du fonctionnement du réacteur suivant le programme de puissance représenté à la figure 1. On voit également que la marge reste suffisante pour que le fonctionnement du réacteur puisse se poursuivre pendant les trois jours correspondant au programme de puissance.

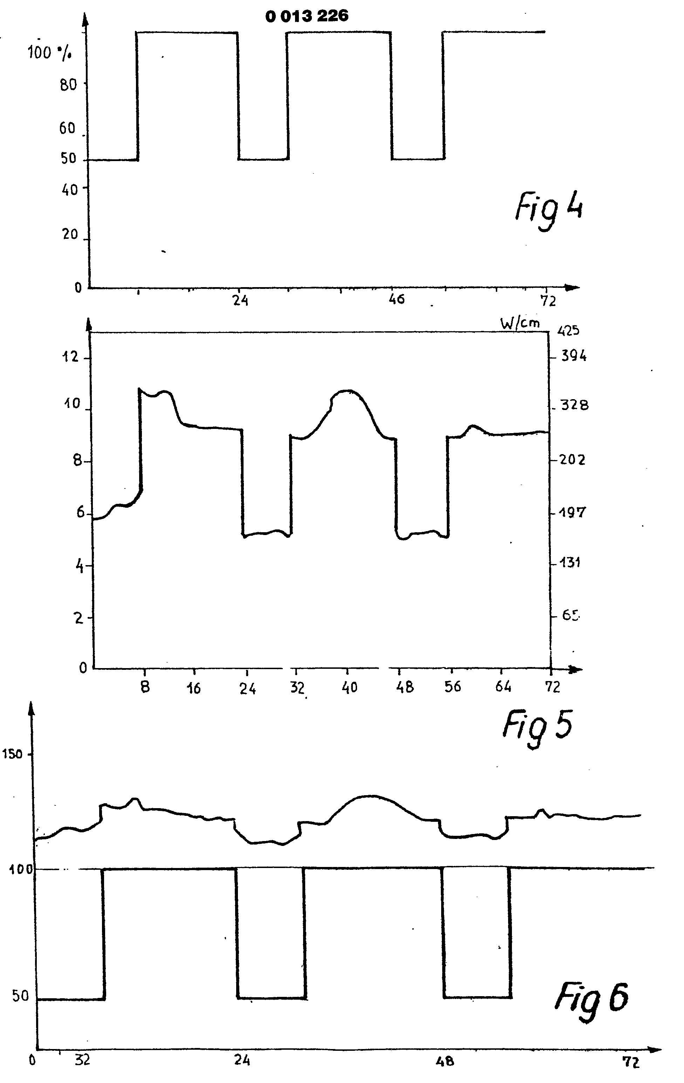

Sur la figure 4, on a représenté un programme de puissance également de trois jours au cours desquels le réacteur nucléaire est utilisé soit à sa puissance nominale soit à 50 % de sa puissance nominale avec retour instantané à cette puissance entre deux phases de fonctionnement.

Sur la figure 5 on a représenté les variations correspondantes de la puissance maximale par unité de longueur en utilisant comme unité le KW par pied et le Watt par centimètre.

On voit que le fonctionnement est possible sans atteindre les limites au-delà desquelles on déclenche un arrêt d'urgence.

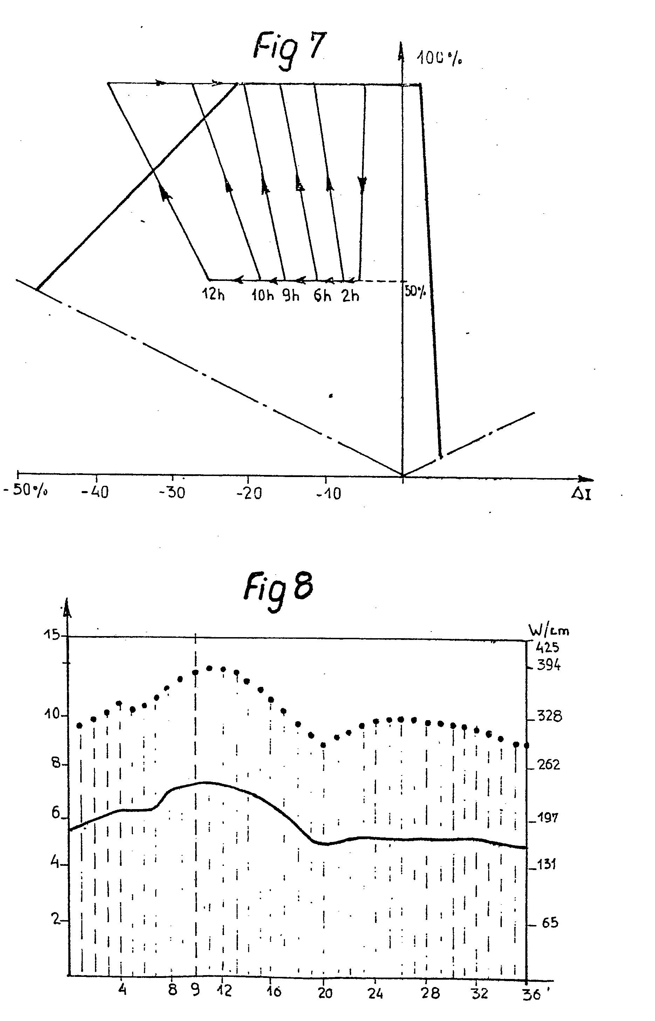

Sur la figure 6 on a représenté les variations correspondantes de la marge vis-à-vis du point de déclenchement de la protection contre la crise d'ébullition et l'on peut voir que le fonctionnement est possible sans atteindre la limite inférieure de la marge de sécurité.

Sur la figure 7, on a représenté dans un diagramme puissance demandée au réacteur par rapport à la puissance nominale en fonction d'un paramètre représentatif de la déviation axiale, un mode de fonctionnement du réacteur entre la puissance nominale et 50 % de la puissance nominale, le maintien du réacteur à 50 % de la puissance nominale ayant lieu pendant des périodes de temps croissantes de 2, 6, 9, 10 et 12 heures.

On a représenté sur ce graphique en traits forts le trapèze de fonctionnement à l'intérieur duquel doivent rester les courbes représentatives du fonctionnement du réacteur pour éviter le déclenchement d'un arrêt d'urgence, lorsqu'on utilise un procédé de protection du réacteur selon l'art antérieur.

On voit que, après un maintien de plus de 9 heures à 50 % de la puissance nominale, il n'est plus possible d'effectuer un retour instantané du réacteur à sa puissance nominale car on sort alors du trapèze de fonctionnement. La méthode de l'art antérieur conduit alors à un arrêt d'urgence par dépassement des limites de fonctionnement.

On voit sur la figure 8 le diagramme correspondant à la puissance par unité de longueur maximum en fonction du temps pour un fonctionnement du réacteur nucléaire entre sa puissance nominale et 50 % de sa puissance nominale avec retour instantané à la puissance nominale à un moment quelconque, des retours en puissance instantanés étant effectués toutes les heures et donnant lieu à une élévation de la puissance par unité de longueur représentée par les points disposés au-dessus de la courbe continue représentant l'évolution de la puissance linéaire dans le cas d'un maintien à 50 % de la puissance nominale.

On voit ainsi qu'on ne dépasse jamais la valeur limite de la puissance maximale par unité de longueur quel que soit le moment auquel on fait retour à la puissance nominale.

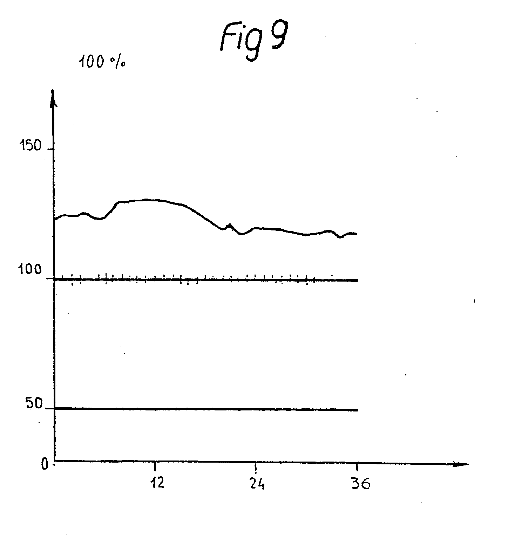

De même sur la figure 9, on voit l'évolution correspondante de la marge vis-à-vis du point de déclenchement de la protection contre la crise d'ébullition dans le cas d'un retour en puissance nominale à un moment quelconque et l'on s'aperçoit que cette marge reste supérieure à la limite basse prévue.

Ce dernier exemple représenté aux figures 7, 8 et 9 montre bien que le procédé suivant l'invention apporte une souplesse accrue dans l'exploitation du réacteur nucléaire grâce à une détermination des distributions axiales et radiales de puissance permettant un calcul plus exact de paramètres représentatifs des limites d'utilisation.

En cas de franchissement d'une limite de fonctionnement relative à un des paramètres représentatifs de la puissance dégagée par unité de longueur ou de la crise d'ébullition, une alarme est déclenchée qui peut conduire suivant le dépassement et la valeur des autres paramètres, soit à un arrêt d'urgence, soit à un blocage de l'extraction des grappes de barres de commande et à une réduction automatique de la charge à la turbine.

Les déterminations des différents paramètres et le déclenchement des alarmes sont obtenus grâce à des micro-processeurs permettant le traitement des différents paramètres mesurés pour en déduire les paramètres de sécurité qui ont été envisagés. La sortie des résultats comporte à la fois des alarmes en cas de dépassement des valeurs limites et la visualisation de l'évolution des différents paramètres qui permettent de surveiller l'évolution des paramètres critiques concernant la protection du réacteur.

Dans le but de faciliter l'obtention des paramètres, on a vu que le calcul s'effectuait sur un canal représentatif du cœur du réacteur nucléaire appelé canal chaud. Il serait cependant possible de calculer les paramètres relatifs à l'ensemble du cœur en utilisant un calculateur de plus grande capacité si l'on accepte aisément des temps de traitement plus importants.

En effet, l'invention ne se limite pas aux modes de réalisation qui ont été décrits mais en comporte toutes les variantes.

En ce qui concerne le calcul de la distribution radiale de puissance à partir de la position des grappes des barres de commande, on a utilisé un procédé consistant à effectuer un sectionnement du cœur suivant sa hauteur (par exemple 30 sections) avec une détermination de la présence ou de l'absence de chacun des groupes de barres de commande au niveau de la section considérée, lors du calcul des facteurs de distribution radiale. On peut imaginer tout autre type de représentation de la position des barres de commande, à partir du moment où l'on mesure avec précision leur position pour chaque étape de fonctionnement du réacteur.

L'invention ne se limite pas non plus à l'utilisation de microprocesseurs pour la détermination de chacun des paramètres et de chacun des paramètres représentatifs des limites de fonctionnement mais il est possible d'imaginer l'utilisation de calculateurs de plus grande capacité pour effectuer les déterminations de paramètres plus complexes.

Les alarmes ou arrêts d'urgence déclenchés à partir de la comparaison des paramètres avec leurs limites assignées, peuvent prendre toute forme possible et nécessiter une intervention manuelle ou au contraire déclencher des actions automatiquement sur les éléments de conduite du réacteur nucléaire.

Enfin, le procédé de protection suivant l'invention peut s'appliquer à un réacteur nucléaire à eau sous pression quel que soit son mode de pilotage et quel que soit le programme de puissance demandé.

**Revendication**

Procédé de protection d'un réacteur nucléaire à eau sous pression comportant des éléments combustibles disposés parallèlement les uns aux autres à l'intérieur du cœur du réacteur, entre lesquels on déplace des barres de commande pour la conduite du réacteur, éléments délimitant entre eux des canaux pour l'eau de refroidissement, ce procédé permettant d'éviter de dépasser les limites de refroidissement au-delà desquelles on porte atteinte à l'intégrité du combustible par l'apparition de la crise d'ébullition et/ou par la fusion d'une ou plusieurs pastilles de combustible, et consistant à déclencher un arrêt d'urgence lorsqu'un paramètre représentatif de la crise d'ébullition le long des éléments combustibles ou de la puissance dégagée par unité de longueur des éléments combustibles a dépassé une valeur limite qui lui a été assignée, les paramètres étant déterminés à partir d'une mesure de la température d'entrée et de sortie de l'eau de refroidissement dans le réacteur, de la pression et du débit de cette eau et à partir des distributions de puissance dans les directions radiales et longitudinales du cœur, la distribution de puissance en direction radiale étant elle-même déterminée à partir de la position des barres de commande et la distribution de puissance dans la direction longitudinale, ou distribution axiale de puissance, étant déterminée par mesure du flux neutronique au moyen de chambres d'ionisation disposées en dehors du cœur du réacteur l'une au-dessus de l'autre, chaque chambre comportant une plage de matériau sensible au bombardement neutronique, s'étendant sur une partie importante de la hauteur de la chambre dans la direction axiale, les résultats de mesure étant obtenus pour chacune des chambres sous forme d'intensité de courant d'ionisation, caractérisé en ce que lesdites chambres d'ionisation sont au nombre de quatre au minimum et occupent toute la hauteur du cœur, et en ce que l'on exploite lesdits résultats de mesure de ces chambres en considérant la distribution de puissance a priori comme un polynôme en fonction de la position axiale du point où se développe cette puissance, afin d'obtenir sur toute la hauteur du cœur une image de la distribution axiale de puissance, image qui sert à déterminer lesdits paramètres.

**Claim**

Process for protecting a pressurised water nuclear reactor comprising fuel elements arranged parallel to one another inside the reactor core, between which control rods are displaced for controlling the reactor, the said elements delimiting channels between one another for the cooling water, this process making it possible to avoid exceeding the cooling limits beyond which the integrity of the fuel is threatened by the appearance of the critical situation of boiling and/or by the melting of one or more fuel pellets, and consisting in triggering an emergency shutdown when a parameter representing the critical situation of boiling along the fuel elements, or representing the power released per unit length of the fuel elements, has exceeded a limiting value which has been assigned thereto, the parameters being determined from measurement of the inlet and outlet temperature of the cooling water in the reactor, and of the pressure and flow rate of this water, and from the power distributions in the radial and longitudinal directions of the core, the power distribution in the radial direction itself being determined from the position of the control rods, and the power distribution in the longitudinal direction, or axial power distribution, being determined by measurement of the neutron flux by means of ionisation chambers arranged above one another outside the reactor core, each chamber comprising a band of material sensitive to neutron bombardment and extending over a substantial part of the height of the chamber in the axial direction, the measurement results being obtained for each of the chambers in the form of ionisation current intensity, characterised in that there are at least four of the said ionisation chambers and they occupy the whole height of the core, and in that the said measurement results from these chambers are treated by considering the power distribution a priori as a polynomial function of the axial position of the point where this power is developed, in order to obtain a representation of the axial power distribution over the whole height of the core, which representation is used to determine the said parameters.

**Anspruch**

Verfahren zum Schutz eines Druckwasserkernreaktors mit innen im Reaktorkern parallel zueinander angeordneten Brennstoffelemente, zwischen denen zum Fahren des Kernreaktors Regelstäbe verschoben werden, wobei die Brennstoffelemente untereinander Kanäle für das Kühlwasser bilden, Verfahren mit dem ein Übertreten der Kühlgrenze verhindert werden kann, jenseits derer die Einheit der Brennstoffelemente durch Auftreten eines kritischen Siedezustandes bzw. durch Schmelzung einer oder mehrerer Brennstofftabletten beeinträchtigt wird, und das darin besteht, ein Notabfahren zu bewirken, wenn ein typischer Parameter des kritischen Siedezustandes entlang der Brennstoffelemente oder der pro Längeneinheit der Brennstoffelemente abgegebenen Leistung einen ihm zugeordneten Grenzwert überschritten hat, wobei diese Parameter ausgehend von einer Messung der Kühlwassereintritts- und Austrittstemperatur in dem Kernreaktor, des Wasserdruckes und -durchsatzes sowie der Leistungsabgabe in die radialen und axialen Richtungen des Reaktorkerns ermittelt werden, und wobei die Leistungsabgabe in radialer Richtung ihrerseits von der Stellung der Regelstäbe bestimmt wird und die Leistungsabgabe in Längsrichtung, oder die axiale Leistungsabgabe, durch Messung des Neutronenflusses mittels außerhalb des Reaktorkerns übereinander angeordneten Ionisationskammern bestimmt wird, wobei jede Kammer ein auf Neutronenbeschuß empfindliches Werkstoffbereich aufweist, der sich über einen grossen Teil der Kammerhöhe in axialer Richtung erstreckt, und die Meßergebnisse für die jeweiligen Kammern als Ionisationsstromstärke erzielt werden, dadurch gekennzeichnet, daß diese Ionisationskammern mindestens vier in der Zahl sind und die gesamte Kernhöhe einnehmen, und daß die Ergebnisse dieser Kammern ausgewertet werden, in dem die Leistungsabgabe von vornherein als ein Polynom entsprechend der Axiallage des Punktes, an dem sich diese Leistung entwickelt, betrachtet wird, um über die gesamte Kernhöhe ein Bild der axialen Leistungsabgabe zu erhalten, das zur Bestimmung dieser Parameter herangezogen wird.

**0 013 226**

Fig 1

Fig 2

Fig 3

0 013 226

Fig 4

Fig 5

Fig 6

2

Fig 7

Fig 8

## Fig 9

100 %